# EUROPEAN PATENT APPLICATION

(11) **EP 4 716 055 A1**
(43) Date of publication of application: **25.03.2026**
(21) Application number: 23937444.0
(22) Date of filing: 15.05.2023
(51) Int. Cl.: H02J 7/00

(54) **ON-VEHICLE POWER CONTROL SYSTEM, POWER DISTRIBUTION DEVICE, AND VEHICLE CENTRAL CONTROL DEVICE**

(71) Applicant: Astemo, Ltd., Tokyo 100-0004 (JP)
(72) Inventor: JUMONJI, Kentaro, Hitachinaka-shi, Ibaraki 312-8503 (JP); YAMAMOTO, Yusuke, Hitachinaka-shi, Ibaraki 312-8503 (JP); FURUMORI, Atsuro, Hitachinaka-shi, Ibaraki 312-8503 (JP); SEKIYA, Masashi, Hitachinaka-shi, Ibaraki 312-8503 (JP); YASUDA, Ayasa, Hitachinaka-shi, Ibaraki 312-8503 (JP)
(74) Representative: Strehl & Partner mbB
(86) International application number: PCT/JP2023/018145
(87) International publication number: WO 2024/236700

(57) **Abstract**

In an on-vehicle power control system in which a power supply and a power distribution device that distributes power supplied from the power supply to a load are connected by a power supply trunk line, and in an on-vehicle power network to which a plurality of the power distribution devices are connected by the power supply trunk line is configured, the power distribution device includes: a semiconductor switch configured to switch a power supply trunk line path to another power supply trunk line path when a failure occurs in the power supply trunk line path through which power is supplied from the power supply trunk line to the own device, and distribute power supplied from the switched power supply trunk line path to the load; and a control unit configured to, when a failure occurs in the power supply trunk line path, bring the semiconductor switch into an intermediate state in which the semiconductor switch is held in an unsaturated state based on switch characteristic information at a timing of switching the power supply trunk line path to the another power supply trunk line path, and perform switching control on the semiconductor switch such that a current flowing into the load from the semiconductor switch in the intermediate state becomes less than an allowable current.

## Description

### Technical Field

The present invention relates to an on-vehicle power control system, a power distribution device, and a vehicle central control device.

### Background Art

In recent years, with the progress of electrification and autonomous driving of automobiles, there has been a demand for reducing the number of wire harnesses used for power supply, and for improving the reliability, redundancy, and efficiency of on-vehicle power network systems that supply power to various parts of vehicles. Conventional on-vehicle power network systems often have a system configuration in which a relay box or a fuse box is provided near a battery, and a power cable is laid and connected radially for each of the sensors and actuators of the vehicles. In such power supply systems, as on-board devices become more electrically powered and more reliable, the number of sensors and actuators mounted increases and the wire harnesses of the power supply systems become enormous due to the need for redundant power supplies.

PTL 1 describes an on-vehicle power supply structure in which a vehicle is divided into a plurality of zones, power supply hubs for connecting electronic devices are provided in the respective zones, and the power supply hubs are connected by power supply hard wires. PTL 1 describes that a disconnection detection harness is provided on a ringshaped power supply hard wire in which the power supply hard wires are connected in a ring shape.

PTL 2 describes that when a malfunction occurs in a device of a device group, a switching means is controlled to regulate power supply to the device group including the device in which the malfunction has occurred.

### Citation List

### Patent Literature

PTL 1: JP 2021-17116 A
PTL 2: JP 2019-189021 A

### Summary of Invention

### Technical Problem

According to the technology described in PTL 1, the power can be distributed from the power distribution devices of the respective zones to sensors and actuators installed nearby, thereby shortening the total length of the wire harness. In addition, according to the technology described in PTL 2, it is possible to avoid interruption of power caused by a fault downstream of the power supply trunk line. Furthermore, in recent years, for the purpose of power saving, longer lifespan, and the like, conventionally adopted mechanical relays have been replaced with semiconductor elements for the power supply switching unit in the zone ECU. However, in a case where power supply trunk lines and a plurality of power distribution devices that distribute power to zones are ring-connected using the technologies described in PTL 1 and PTL 2, if an abnormality occurs in one power supply trunk line, the following problem occurs.

For example, there is a problem that occurs at the time of switching the power supply path when a ground fault or a disconnection fault occurs in a power supply trunk line that connects a battery and a power distribution device or connects power distribution devices. In this case, when the power supply path is switched, a pulse drain current may flow into a sensor, an actuator, and the like (hereinafter referred to as "component") connected downstream of the power distribution device, which may damage the semiconductor switch for switching the power supply path within the power distribution device. The semiconductor switch includes, for example, a field effect transistor (MOSFET), and is damaged when a current exceeding a maximum rated current flows.

The pulse drain current is generated by an aluminum electrolytic capacitor that is built into each component to stabilize an internal power supply. The larger the capacitance of the aluminum electrolytic capacitor, the larger the pulse drain current value. In the vehicle architecture renewal trend, there is a tendency to consolidate power distribution functions into the power distribution device, and as the number of components connected to the power distribution device increases, the pulse drain current increases, increasing the possibility of damage.

In a case where the power distribution devices are connected in a ring shape via the power supply trunk line, a similar current may flow into a semiconductor switch of a power distribution device connected in series from the battery and adjacent to the own device on the power supply path, and there is a possibility that the semiconductor switch of the adjacent power distribution device may be damaged. In addition, the power range in which the pulse drain current can be suppressed by the unsaturation control of the semiconductor switch is limited, and if the power range deviates from this range, the semiconductor switch may be damaged. In the power supply system, a plurality of power distribution devices are mounted in each zone of the vehicle to supply power to various sensors, actuators, ECUs, and the like. For this reason, the amounts of pulse drain current caused by the components of the power device cannot be uniformly defined.

The present invention has been made to solve such a technical problem, and an object of the present invention is to prevent damage to the semiconductor switch of the own device caused by a current flowing from another power distribution device adjacent to the own power distribution device at the time of switching the power supply trunk line.

### Solution to Problem

In an on-vehicle power control system according to the present invention, a power supply and a power distribution device that distributes power supplied from the power supply to a load are connected by a power supply trunk line, and power to be supplied to the power distribution device is controlled in an on-vehicle power network to which a plurality of the power distribution devices are connected by the power supply trunk line.

The power distribution device includes: a semiconductor switch configured to switch a power supply trunk line path to another power supply trunk line path when a failure occurs in the power supply trunk line path through which power is supplied from the power supply trunk line to the own device, and distribute power supplied from the switched power supply trunk line path to the load; and a control unit configured to, when a failure occurs in the power supply trunk line path, bring the semiconductor switch into an intermediate state in which the semiconductor switch is held in an unsaturated state based on switch characteristic information regarding an allowable current allowed by the semiconductor switch at a timing of switching the power supply trunk line path to the another power supply trunk line path, and perform switching control on the semiconductor switch such that a current flowing into the load from the semiconductor switch in the intermediate state becomes less than the allowable current.

### Advantageous Effects of Invention

According to the present invention, it is possible to bring the semiconductor switch into an intermediate state in which the semiconductor switch is held in an unsaturated state at a timing of switching the power supply trunk line path to another power supply trunk line path, and perform switching control on the semiconductor switch such that a current flowing into the load from the semiconductor switch in the intermediate state becomes less than the allowable current. Therefore, it is possible to prevent the semiconductor switch of the own device from being damaged by a current flowing from another power distribution device adjacent to the own device.

Problems, configurations, and effects other than those described above will become apparent from the following description of embodiments.

### Brief Description of Drawings

[FIG. 1] FIG. 1 is a block diagram illustrating a basic configuration example of a power supply system according to a first embodiment of the present invention.
[FIG. 2] FIG. 2 is a diagram illustrating an example of a power supply trunk line path through which power is supplied from the low-voltage battery and the DC/DC converter to a component according to the first embodiment of the present invention.
[FIG. 3] FIG. 3 is a diagram illustrating an example of a path through which power is supplied from the DC/DC converter to a component according to the first embodiment of the present invention.
[FIG. 4] FIG. 4 is a block diagram illustrating an internal configuration example of a first power distribution device according to the first embodiment of the present invention.
[FIG. 5] FIG. 5 is a diagram of a first example illustrating how each voltage, a gate control signal, and a current change according to power supply selection according to the first embodiment of the present invention.
[FIG. 6] FIG. 6 is a diagram of a second example illustrating how power and current change according to power supply selection according to the first embodiment of the present invention.
[FIG. 7] FIG. 7 is a block diagram illustrating a configuration example of a power supply system according to a second embodiment of the present invention.
[FIG. 8] FIG. 8 is a block diagram illustrating a configuration example of a vehicle central control device in a power supply system according to a third embodiment of the present invention.
[FIG. 9] FIG. 9 is a block diagram illustrating a configuration example of a power supply system according to a fourth embodiment of the present invention.
[FIG. 10] FIG. 10 is a diagram illustrating how each voltage, a gate control signal, and a current change according to power supply selection according to the fourth embodiment of the present invention.
[FIG. 11] FIG. 11 is a block diagram illustrating a configuration example of a power supply system according to a fifth embodiment of the present invention.
[FIG. 12] FIG. 12 is a block diagram illustrating an internal configuration example of a first power distribution device in a power supply system according to a sixth embodiment of the present invention.
[FIG. 13] FIG. 13 is a diagram illustrating a configuration example of a component operation continuation priority list according to the sixth embodiment of the present invention.
[FIG. 14] FIG. 14 is a diagram illustrating how each voltage, a gate control signal, and a current change according to power supply selection according to the sixth embodiment of the present invention.
[FIG. 15] FIG. 15 is a block diagram illustrating a configuration example of a vehicle central control device included in a power supply system according to a seventh embodiment of the present invention.
[FIG. 16] FIG. 16 is a diagram illustrating a configuration example of a component operation continuation priority list provided in the vehicle central control device according to the seventh embodiment of the present invention.

### Description of Embodiments

Hereinafter, embodiments of the present invention will be described with reference to the accompanying drawings. In the present specification and drawings, components having substantially the same functions or configurations will be denoted by the same reference signs, and redundant explanations will be omitted. The present invention is applicable to, for example, a vehicle control calculation device capable of communicating with an electronic control unit (ECU) for an advanced driver assistance system (ADAS) or an autonomous driving (AD) vehicle.

### [First Embodiment]

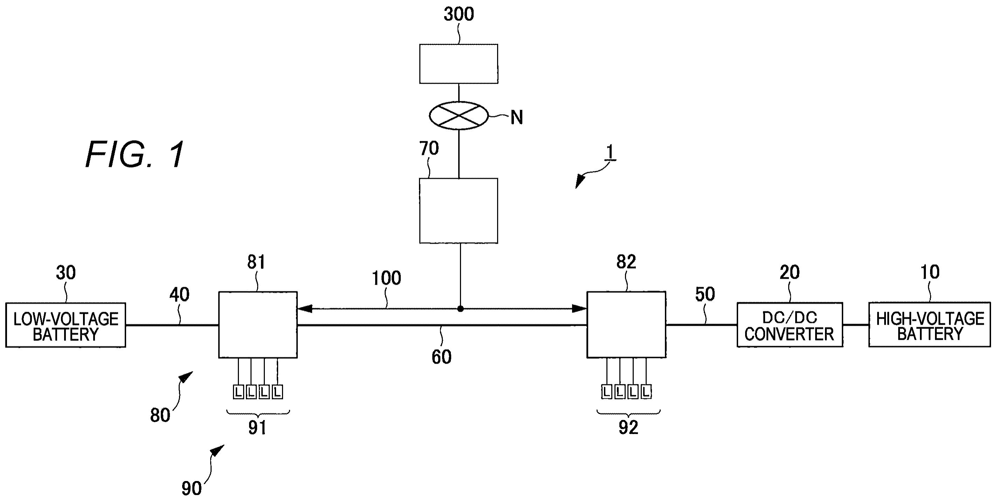

First, a configuration example and an operation example of a power supply system according to a first embodiment of the present invention will be described with reference to FIGS. 1 to 6.

FIG. 1 is a block diagram illustrating a basic configuration example of a power supply system 1 according to the first embodiment.

The power supply system 1 according to the first embodiment controls power supplied from a power supply device (also abbreviated as a power supply) to various control devices, loads, and sensors. The power supply system 1 illustrated in FIG. 1 includes a high-voltage battery 10, a DC/DC converter 20, a low-voltage battery 30, a vehicle central control device 70, and a plurality of power distribution devices (a first power distribution device 81 and a second power distribution device 82).

Each of the first power distribution device 81 and the second power distribution device 82 is configured as a function of a zone ECU (not illustrated). The zone ECU divides the vehicle into areas called zones, and has a function of controlling operations of various sensors and actuators for each zone. Further, the power distribution function of the first power distribution device 81 and the second power distribution device 82 is, for example, one of the various functions of the zone ECU. Main functions of the zone ECU include a power distribution function, a communication hub function (a communication function between a downstream device and a central device or between a plurality of zone ECUs), a general-purpose input/output circuit control function, etc. In the following description, the first power distribution device 81 and the second power distribution device 82 will be collectively referred to as power distribution devices 80 when there is no need to distinguish them.

The power supply system 1 is an example of an on-vehicle power control system in which power supplied to the plurality of power distribution devices 80 is controlled by an on-vehicle power network in which the power distribution devices 80 are connected by a power supply trunk line. In addition, the power distribution device 80 is connected to a power network made up of a plurality of power supply trunk lines to which a plurality of power supplies are connected, respectively, and has a function of distributing power supplied from one of the plurality of power supply trunk lines to a load (a component 90).

The power network constituting the power supply system 1 has a configuration in which the power supply (the low-voltage battery 30 or the DC/DC converter 20) and a power distribution device 80 that distributes power supplied from the power supply to a load (the component 90) are connected by a power supply trunk line. The low-voltage battery 30 and the first power distribution device 81 are connected by a power supply trunk line 40. The DC/DC converter 20 and the second power distribution device 82 are connected by a power supply trunk line 50. The first power distribution device 81 and the second power distribution device 82 are connected by a power supply trunk line 60.

The high-voltage battery 10 is a main power supply for the vehicle, and is a large-capacity battery mainly used for driving the vehicle.

The low-voltage battery 30 is mainly used as a source for supplying power to a control device, a load, and a sensor mounted in the vehicle. The low-voltage battery 30 can be charged with power supplied from the high-voltage battery 10.

The DC/DC converter 20 has a role of converting the voltage from the high-voltage battery 10 to the low-voltage battery 30 and supplying power from the high-voltage battery 10 to the low-voltage battery 30. Furthermore, the DC/DC converter 20 has a function of adjusting and changing the voltage output to the low-voltage battery 30.

The vehicle central control device 70 is a device that performs various calculations to appropriately control the entire vehicle based on various types of vehicle information, and is also referred to as a central ECU. The vehicle central control device (the vehicle central control device 70) controls power supplied to the plurality of power distribution devices 80. In addition, various functions of the zone ECUs configured around the central ECU are controlled by the vehicle central control device 70. In the present specification, the description will be given focusing on the point that the vehicle central control device 70 controls the power distribution devices 80 provided in the zone ECUs. The vehicle central control device 70 and each of the first power distribution device 81 and the second power distribution device 82 are connected by a vehicle communication bus or a communication protocol adopted in an automobile such as Ethernet (registered trademark), a controller area network (CAN), or a local interconnect network (LIN). In addition, the vehicle central control device 70 can communicate with a server 300 via the Internet N or the like.

The server 300 includes a storage device (not illustrated) and the like. When assembling the vehicle or replacing the load device, the vehicle central control device 70 receives vehicle information from the server 300 via the Internet N. The vehicle information includes information on products such as actuators mounted on the vehicle. When the vehicle central control device 70 is activated for the first time, the vehicle central control device 70 transmits vehicle information to the zone ECU in the vehicle. The vehicle information transmitted to the zone ECU includes, for example, information on load devices connected to the zone ECU, information on resistances of semiconductor switches of adjacent zone ECUs, and the like. Therefore, the vehicle central control device (the vehicle central control device 70) can distribute the information on resistances of semiconductor switches to the power distribution devices 80. By distributing the vehicle information to each zone ECU in this manner, a control microcomputer 210 for each zone ECU can share the vehicle information including the information on resistances of semiconductor switches.

The first power distribution device 81 and the second power distribution device 82 supply power supplied from the low-voltage battery 30 or the DC/DC converter 20 to a single component or a plurality of components located downstream. The first power distribution device 81 and the second power distribution device 82 are serially connected and arranged adjacent to each other.

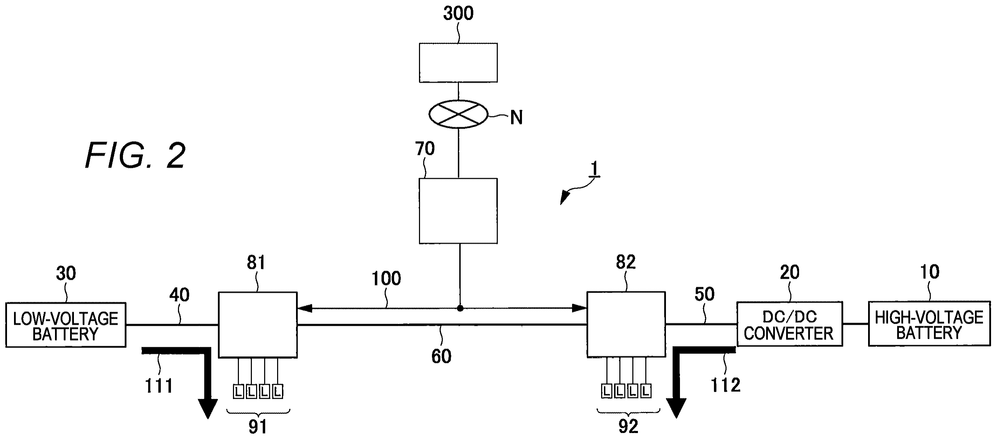

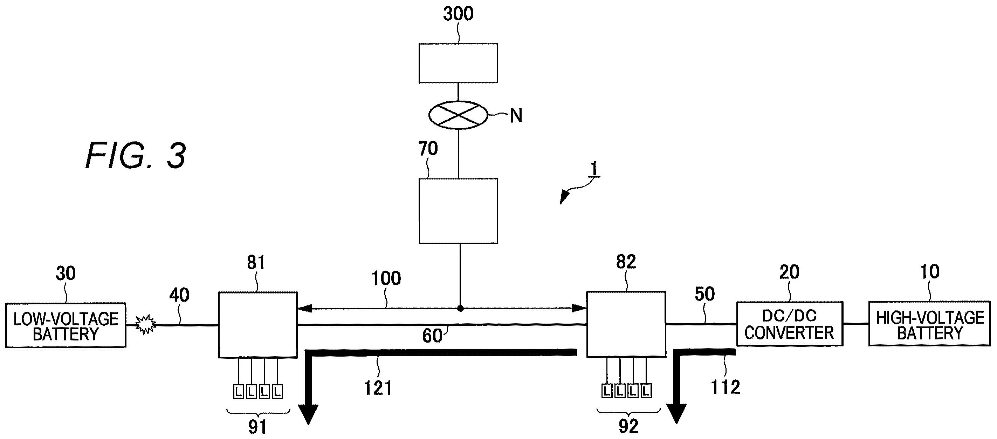

Downstream of the first power distribution device 81 and the second power distribution device 82, various components such as control devices, loads, or sensors are connected, and power is distributed to the various components. For example, a component 91 is connected to the first power distribution device 81, and a component 92 is connected to the second power distribution device 82. In the following description, the components 91 and 92 will be collectively referred to as components 90 when there is no need to distinguish them. There are a plurality of patterns of combinations of paths for supplying power from the power distribution devices 80 to the respective components 90. Here, the combinations of paths for supplying power from the power distribution devices 80 to the components 90 will be described with reference to FIGS. 2 and 3.

FIG. 2 is a diagram illustrating examples of power supply trunk line paths through which power is supplied from the low-voltage battery 30 to the component 91 and power is supplied from the DC/DC converter 20 to the component 92.

In the example illustrated in FIG. 2, a power supply trunk line path 111 through which power is supplied from the low-voltage battery 30 to the component 91 connected to the first power distribution device 81 is illustrated. In addition, a power supply trunk line path 112 through which power is supplied from the DC/DC converter 20 to the component 92 connected to the second power distribution device 82 is also illustrated. When the power supply trunk lines 40 and 50 are in a normal state in this manner, power is supplied from the power distribution devices 80 set in advance to the respective components 90.

FIG. 3 is a diagram illustrating examples of power supply trunk line paths through which power is supplied from the DC/DC converter 20 to the components 91 and 92.

FIG. 3 illustrates a power supply trunk line path switched when a failure occurs in the power supply trunk line 40 and power cannot be supplied from the low-voltage battery 30 to the first power distribution device 81. In this case, as illustrated in a power supply trunk line path 121 for supplying power, power is supplied from the DC/DC converter 20 to the component 91 connected to the first power distribution device 81 via the second power distribution device 82 adjacent thereto. As illustrated in FIG. 2, power is supplied from the DC/DC converter 20 to the component 92 connected to the second power distribution device 82 through the power supply trunk line path 112.

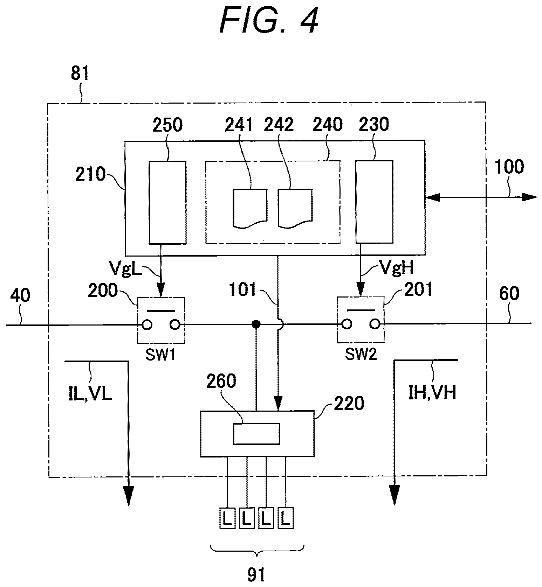

Next, a configuration example of the power distribution device will be described in detail with reference to FIG. 4.

FIG. 4 is a block diagram illustrating an internal configuration example of the first power distribution device 81. Since the second power distribution device 82 has the same configuration as the first power distribution device 81, a configuration example and an operation example will be described in FIG. 4 focusing on the first power distribution device 81.

Semiconductor switches 200 and 201 connected to the power supply trunk lines include field effect transistors and drive circuits, and supply or cut off power to or from the component 91. In the drawing, the semiconductor switch 200 is also referred to as "SW1", and the semiconductor switch 200 is also referred to as "SW2". The semiconductor switches 200 and 201 include, for example, intelligent power devices (IPDs) or semiconductor discrete components, and have a function of energizing or interrupting power supply. In addition, the semiconductor switches 200 and 201 have a function of adjusting the energization current amount or the supply voltage value, and performing various types of fault diagnoses, self-diagnosis, and the like. When a failure occurs in the power supply trunk line path through which power is supplied from the power supply trunk line to the own device, the semiconductor switch (the semiconductor switch 200 or 201) switches to another power supply trunk line path, and distributes the power supplied from the switched power supply trunk line path to the load.

The first power distribution device 81 includes a semiconductor switch 200 for switching connection/disconnection of the power supply trunk line, a semiconductor switch 260 for supplying or cutting off power to or from the component 91, and a control microcomputer 210 for controlling each of the semiconductor switches 200, 201, and 260 according to information.

The power supply trunk line 40 is connected to one end of the semiconductor switch 200, and one end of the semiconductor switch 201 and a power distributor 220 are connected to the other end of the semiconductor switch 200. The semiconductor switch 201 controls energization or interruption of the power supply trunk line 40 by receiving a gate control signal VgL from the control microcomputer 210. When the semiconductor switch 200 is energizable, the semiconductor switch 201 is at a high level. Therefore, a power supply voltage VL of the low-voltage battery 30 is supplied from the power supply trunk line 40 to the semiconductor switch 200, and a current IL flows into the semiconductor switch 200.

The other end of the semiconductor switch 200 is connected to one end of the semiconductor switch 201, and the power supply trunk line 60 is connected to the other end of the semiconductor switch 201. The semiconductor switch 201 controls energization or interruption of the power supply trunk line 60 by receiving a gate control signal VgH from the control microcomputer 210. When the semiconductor switch 201 is energizable, the semiconductor switch 200 changes to a low level. Therefore, a power supply voltage VH of the high-voltage battery 10 is supplied from the power supply trunk line 60 via the DC/DC converter 20 to the semiconductor switch 201, and a current IH flows into the semiconductor switch 201.

The power distributor 220 has a function of individually distributing power to each unit of the component 91 connected to the first power distribution device 81. The power distributor 220 has a semiconductor switch 260, and has a function of limiting power supply so that excessive power is not supplied to the component 91. The semiconductor switch 260 controls an operation of supplying power to the component 91 according to a gate control signal 101 input from the control microcomputer 210.

When a failure occurs in the power supply trunk line path (the power supply trunk line 40), the control unit (the control microcomputer 210) brings the semiconductor switch (the semiconductor switch 201) into an intermediate state for holding the semiconductor switch in an unsaturated state based on switch characteristic information relating to an allowable current allowed by the semiconductor switch at a timing when the power supply trunk line path is switched to another power supply trunk line path (the power supply trunk line 60). In addition, the control unit (the control microcomputer 210) controls the switching of the semiconductor switch (the semiconductor switch 201) such that the current flowing into the load from the semiconductor switch (the semiconductor switch 201) in the intermediate state becomes less than the allowable current. The semiconductor switch (the semiconductor switch 201) subjected to the switching control distributes the power supplied from the switched power supply trunk line (the power supply trunk line 60) to the load (the component 91).

The control microcomputer 210 includes a communication unit 230, a data storage unit 240, and a calculation unit 250.

The communication unit 230 has a communication function of communicating with the other power distribution device (the second power distribution device 82 in the first embodiment) and the vehicle central control device 70 via a communication line 100 to exchange various types of information and data. The communication unit 230 is realized by, for example, a network interface card (NIC) or the like.

The data storage unit 240 has a storage function of storing data such as field effect transistor characteristic data 241 and resistance characteristic data 242 for the field effect transistors constituting the semiconductor switches. The resistance characteristic data 242 for the field effect transistors includes information on the pulse drain current damage resistances of the semiconductor switches. The data storage unit 240 is realized by, for example, a hard disk drive (HDD), a solid state drive (SSD), a nonvolatile memory, or the like. The data storage unit 240 records programs, data, and the like necessary for the control microcomputer 210 to operate, and is used as an example of a non-transitory computer-readable storage medium storing programs executed by the control microcomputer 210.

The calculation unit 250 has a calculation function of performing a predetermined calculation based on various types of data read from the data storage unit 240. The calculation unit 250 includes, for example, a central processing unit (CPU) and a micro processing unit (MPU), and can read and execute a program code of software that realizes each function according to the present embodiment from a read only memory (ROM) of the data storage unit 240.

In addition to the above-described functions, the control microcomputer 210 also has functions of performing various types of fault diagnoses, self-diagnosis, and the like.

### <Description of Control at Intermediate Level>

In the power supply system 1 described in the first embodiment, the control microcomputer 210 of each of the first power distribution device 81 and the second power distribution device 82 controls the gate voltage to the intermediate level in accordance with the characteristics of the field effect transistor used in each device. For example, it is assumed that a disconnection fault or a ground fault occurs in the power supply trunk line between the low-voltage battery 30 and the power distribution device, and the state of power supply through the power supply trunk line path illustrated in FIG. 2 is switched to the state of power supply through the power supply trunk line path illustrated in FIG. 3. In this case, when the pulse drain current flowing through the first power distribution device 81 flows out from the second power distribution device 82 and a current exceeding the allowable current value of the field effect transistor of the second power distribution device 82 flows, the field effect transistor may be damaged.

Therefore, before the control microcomputer 210 switches the power supply trunk line, the communication unit 230 receives in advance the field effect transistor characteristic data 241 including characteristics of the field effect transistor of the other power distribution control device connected in bypass (in series) on the trunk line path. In addition, the control microcomputer 210 stores the field effect transistor characteristic data 241 received by the communication unit 230 in the data storage unit 240.

The control unit (the control microcomputer 210) determines an intermediate state holding time Tm based on the switch characteristic information of the semiconductor switch (the semiconductor switch 200 or 201) included in the own device (the first power distribution device 81) and the switch characteristic information of the semiconductor switch (the semiconductor switch 200 or 201) included in the other power distribution device (the second power distribution device 82). In addition, the control unit (the control microcomputer 210) controls the switching of the semiconductor switch (the semiconductor switch 200 or 201) included in the own device (the first power distribution device 81) based on the holding time. At this time, the calculation unit 250 compares the field effect transistor characteristics of its own power distribution device with the field effect transistor characteristics of the other power distribution device. Next, the calculation unit 250 performs controls to select an intermediate level of the gate voltage and an intermediate level holding time Tm in accordance with the characteristics of the field effect transistor having a lower resistance. Such control avoids damage to the field effect transistor of the power distribution device that may occur when the power supply trunk line is switched. Further, even after the power supply trunk line is switched, the power distributor 220 can stably supply power to the component 90.

When the control microcomputer 210 switches the power supply trunk line, it is necessary to switch the power supply trunk line within a time for which the control device, which is one of the loads connected downstream of the first power distribution device 81, can continue to operate. If the power supply is switched after the allowable time has elapsed, the power supply to the control device connected downstream is cut off, and the control device restarts the power supply, making it difficult to ensure the continued stability of the vehicle. That is, the time for which the gate voltage is held at the intermediate level is basically set within the range for the allowable switching time for switching the power supply trunk line.

### <Operation Examples of Field Effect Transistor and Drive Circuit>

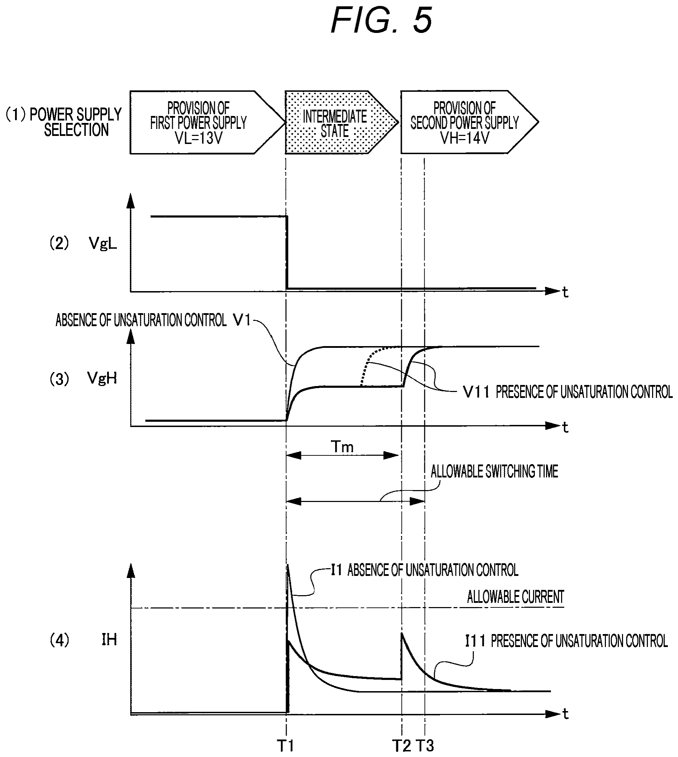

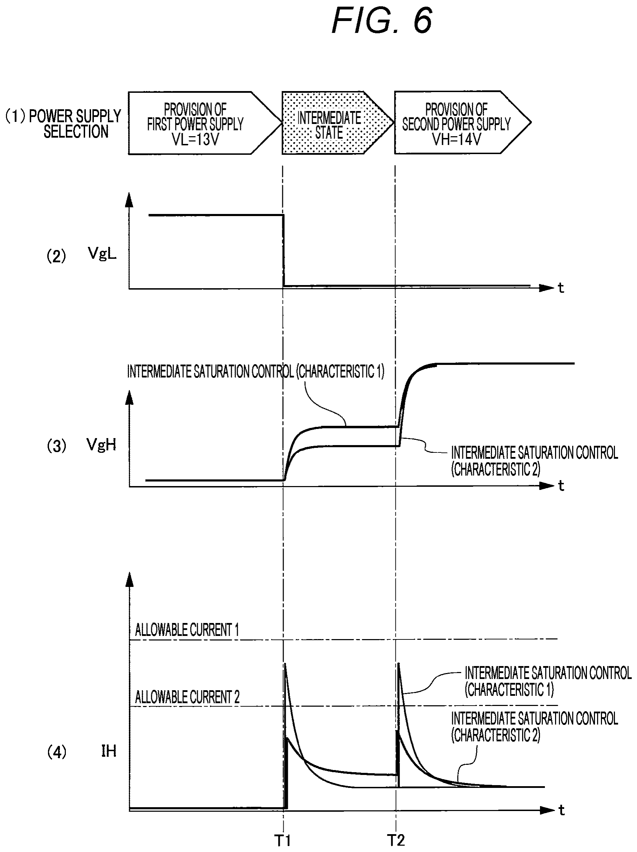

Here, the details of the above-described control at the intermediate level will be described with reference to FIGS. 5 and 6. Here, the operation examples of the field effect transistor and the drive circuit will be described.

FIG. 5 is a diagram of a first example illustrating how each voltage, a gate control signal, and a current change according to power supply selection.

In FIG. 5, (1) power supply selection shows how a power supply is selected so that power can be supplied from the power supply trunk line 60, for example, when a failure occurs in the power supply trunk line 40. For example, while a first power supply is provided, the power supply voltage VL supplied from the low-voltage battery 30 is 13 V. In addition, while a second power supply is provided, the power supply voltage VH supplied from the high-voltage battery 10 is 14 V. There is an intermediate state between the provision of first power supply and the provision of second power supply.

The field effect transistor constituting the semiconductor switch 200 or 201 is controlled by the gate voltage Vg output from the drive circuit. The gate voltage Vg is output at one of a low level, an intermediate level, and a high level. The gate voltage Vg is referred to as a gate control signal VgL for controlling the operation of the semiconductor switch 200 or a gate control signal VgH for controlling the semiconductor switch 201.

Time chart (2) shows how the gate control signal VgL changes.

Time chart (3) shows how the gate control signal VgH changes.

Time chart (4) shows how the current IH changes by providing the second power supply.

### (Provision of First Power Supply)

While power is supplied from low-voltage battery 30, which is the first power supply, the gate control signal VgL is maintained at the high level. When the gate control signal VgL is high, since the resistance value of the semiconductor switch 200 is small, the power supply voltage VL supplied from the low-voltage battery 30 is applied to the semiconductor switch 200 and the power distributor 220, and the current IL flows into the component 91. On the other hand, while the first power supply is provided, the gate control signal VgH is maintained at the low level. When the gate control signal VgH is low, since the resistance value of the semiconductor switch 200 is large, the power supply voltage VH supplied from the high-voltage battery 10 is not applied to the power distributor 220, and the current IH does not flow through the component 91.

### (Intermediate State)

The control microcomputer 210 controls the field effect transistor to an unsaturated state by using the intermediate level. The control to the unsaturated state can suppress the pulse drain current flowing to the field effect transistor as compared with the direct transition of the gate signal from the low level to the high level. The control to the unsaturated state can also prevent damage to the field effect transistor. The control microcomputer 210 determines an intermediate level and a holding time Tm for holding the intermediate level depending on the pulse drain current damage resistance of the semiconductor switch. The state in which the field effect transistor is controlled to the unsaturated state is referred to as an "intermediate state".

At time T1 when the intermediate state is started, the gate control signal VgL changes to the low level as shown in time chart (2), while the gate control signal VgH changes to the intermediate level as shown in time chart (3). When the unsaturation control is not performed, the gate control signal VgH changes to the high level as indicated by graph V1. In this case, as indicated by graph I1 of time chart (4), the current IH that has suddenly increased exceeds the allowable current set in advance in the field effect transistor.

On the other hand, when the unsaturation control is performed in the intermediate state, at time T1 when the intermediate state is started, the gate control signal VgH is held at the intermediate level for the holding time Tm as indicated by graph V11 of time chart (3). In the presence of unsaturation control, as indicated by a bold solid line in current graph I11 of time chart (4), the increased current IH does not exceed the allowable current.

The timing at which the unsaturation control is performed can be arbitrarily adjusted within the range for the allowable switching time, which is defined in advance to be a range from time T1 to time T3, as indicated by broken line and thick solid line graphs V11. For example, the broken line graph V11 indicates that the gate control signal VgH changes to the intermediate level at the timing of time T1, and then changes to the high level at a timing earlier than time T2. On the other hand, the thick solid line graph V11 indicates that the gate control signal VgH changes to the intermediate level at the timing of time T1, and then changes to the high level at the timing of time T2.

The control microcomputer 210 according to the first embodiment controls the operation of the semiconductor switch 201 so that after the gate control signal VgH changes to the intermediate level at time T1 when the intermediate state starts (first stage), the gate control signal VgH changes to the high level at time T2 defined by the holding time Tm within the allowable switching time (second stage). By changing the level of the gate control signal VgH in two stages, the control microcomputer 210 can prevent the current IH from flowing into the semiconductor switch 260 of the power distributor 220 in excess of the allowable current, as compared with the case in which the unsaturation control is absent.

### (Provision of Second Power Supply)

The control microcomputer 210 switches from the intermediate state to the provision of second power supply at time T2. During the provision of second power supply, power is supplied from the DC/DC converter 20, which is the second power supply. As illustrated in time chart (3), the control microcomputer 210 changes the gate control signal VgH to the high level at which the field effect transistor operates. At this time, as shown in time chart (4), a current IH that is less than the allowable current flows into the power distributor 220 via the semiconductor switch 201. Therefore, an excessive current IH does not flow into the semiconductor switch 201, and the component 91 is not destroyed.

FIG. 6 is a diagram of a second example illustrating how the power and the current change according to the power supply selection.

Time charts (2) to (4) in FIG. 6 show how the gate control signal VgL, the gate control signal VgH, and the current IH when the second power supply is provided change. Description of the provision of first power supply will be omitted.

### (Intermediate State)

As shown in time chart (3) of FIG. 6, when the state shifts to the intermediate state at time T1, the intermediate saturation control of the gate control signal VgH is performed. Here, the control of the field effect transistor of the semiconductor switch to the unsaturated state by the control microcomputer 210 using the intermediate level in the intermediate state is referred to as "intermediate saturation control". When a difference in the output voltage of the gate control signal VgH causes a difference in the resistance value inside the semiconductor in the unsaturated state of the semiconductor switch 201, the amount of suppression of the pulse drain current changes depending on the difference in low resistance value. For this reason, characteristic 1 and characteristic 2 are provided for the intermediate saturation control of the gate control signal VgH.

Time chart (4) of FIG. 6 shows an example in which two types of allowable currents 1 and 2 are set. Allowable current 1 is larger than allowable current 2. The difference between allowable currents 1 and 2 is based on assumed current values that can be tolerated as pulse drain currents when different semiconductor devices are used. In the intermediate saturation control having characteristic 1, the current IH exceeds allowable current 2, but is less than allowable current 1. On the other hand, in the intermediate saturation control having characteristic 2, the current IH is less than allowable current 2.

In the power supply system 1 according to the first embodiment, the resistance characteristics of the field effect transistor are stored in the data storage unit 240 of the control microcomputer 210, but this is not necessarily limited to the control microcomputer 210. In addition, there are assumed a plurality of timings at which the power distribution device (e.g., the first power distribution device 81) receives resistance characteristic data 242 including information on the pulse drain current damage resistance of the semiconductor switch (the field effect transistor) of the other power distribution device (e.g., the second power distribution device 82). For example, a software write timing in a process of producing the power distribution device, an over the air (OTA) implementation timing after the power distribution device is mounted on the vehicle, a timing at which the component 90 is added or deleted, and the like are assumed. Therefore, in the first embodiment, there is no restriction on the timing at which the resistance characteristic data 242 for the field effect transistor is received.

In the power supply system 1 according to the first embodiment described above, the control microcomputer 210 of the power distribution device acquires the field effect transistor characteristic data 241 and the resistance characteristic data 242 for the semiconductor switch in advance from the other power distribution device. When a failure occurs in the power supply trunk line 40, the control microcomputer 210 performs the intermediate saturation control of the gate control voltage VgH when shifting to the intermediate state. At this time, at the time of switching the power supply trunk line, the control microcomputer 210 of the first power distribution device 81 compares the resistances of the semiconductor switches based on the resistance information for the semiconductor switch of the own device and the resistance information for the semiconductor switch of the second power distribution device 82 adjacent thereto. Then, the control microcomputer 210 of the first power distribution device 81 performs the intermediate saturation state control of the semiconductor switch in accordance with the low resistance. As a result, the current IH supplied from the power supply trunk line 40 can be suppressed to be less than the allowable current. In addition, in the power supply system 1 according to the first embodiment, it is also possible to appropriately supply power to the sensors, the actuators, and the ECUs.

In addition, the calculation unit 250 sets different allowable currents 1 and 2 according to characteristics 1 and 2. When a failure occurs in the power supply trunk line 40, the control microcomputer 210 performs the intermediate saturation control of the gate control voltage VgH in accordance with characteristics 1 and 2. As a result, the calculation unit 250 can suppress the current IH supplied from the power supply trunk line 40 according to characteristics 1 and 2 to be less than the allowable current. In this manner, the power supply trunk line is switched through the intermediate state in which the semiconductor switch is held in the unsaturated state, making it possible to prevent the semiconductor switch of the own device from being damaged by the current flowing in from the second power distribution device 82 adjacent to the first power distribution device 81.

In addition, the control microcomputer 210 of the first power distribution device 81 switches the power supply trunk line in consideration of the resistance of the semiconductor switch to damage caused by the pulse drain current flowing in from the second power distribution device 82 adjacent to the own device. Therefore, the calculation unit 250 can prevent damage to the semiconductor switch.

Power consumption (loss) in the unsaturated state is larger than that in a saturated state of a semiconductor switch included in a conventional power distribution device. On the other hand, damage to the semiconductor switch caused by an excessive temperature rise can be suppressed by dissipating heat from the substrate or the housing of the power distribution device, but it is not possible to uniformly define the power distribution devices because the power distribution devices have different connection loads at locations where they are mounted. In addition, in order to uniformly define the specifications of the power distribution devices even if the classes of vehicles on which the power distribution devices are mounted, the locations where the power distribution devices are mounted, and the configurations of the components are different, for example, over-spec semiconductor switches or high-heat dissipation housings have been adopted. For this reason, it is not possible to reduce the size or weight of the power distribution device to an appropriate size, or to configure the power distribution device at low cost.

In addition, in a power supply system in which a plurality of power distribution devices are connected by a power supply trunk line, even if the power supply path can be switched when a fault occurs in the power supply trunk line, there is a possibility that the semiconductor switch of the own device is damaged by a pulse drain current caused by an adjacent power distribution device. For this reason, power cannot be supplied to the sensors, the actuators, and the ECUs connected downstream from the power supply trunk line via the power distribution device, increasing the influence on the vehicle system. The pulse drain current varies depending on the vehicle type of the vehicle on which the power distribution device is mounted, and the heat dissipation characteristics also vary depending on the shape of the mounted device. For example, a high-class control device is likely to have a large pulse drain current because the number of loads and control devices mounted is large. For this reason, it has been difficult to prevent the cutoff of power with a technique for avoiding a fault of a semiconductor switch using the uniformly determined unsaturated state.

In contrast, by configuring the power distribution device according to the first embodiment, it is possible to suppress a pulse drain current that causes a fault in the semiconductor switch 200 from flowing into the own device from an adjacent power distribution device. Therefore, in the power supply system 1 according to the first embodiment, in order to easily dissipate heat from the housing of the power distribution device, the size of the housing is set to be medium, and the sizes of housings of middle-class and low-class power distribution devices are also unified to be medium. By unifying the sizes of the housings in this manner, it is possible to maintain the power distribution devices constituting the power supply system 1 according to the first embodiment at an appropriate device size.

Note that the vehicle central control device (the vehicle central control device 70) may determine an intermediate state holding time based on the switch characteristic information for the semiconductor switches (the semiconductor switches 200 and 201) included in the plurality of power distribution devices (e.g., the second power distribution device 82) on the switched power supply trunk line path. Therefore, the control unit (the control microcomputer 210) of the power distribution device (the first power distribution device 81) in which a failure has occurred in the power supply trunk line path through which power is supplied to the own device may perform switching control on the semiconductor switch (the semiconductor switch 200 or 201) included in the own device (the first power distribution device 81) based on the holding time determined by the vehicle central control device (the vehicle central control device 70).

### [Second Embodiment]

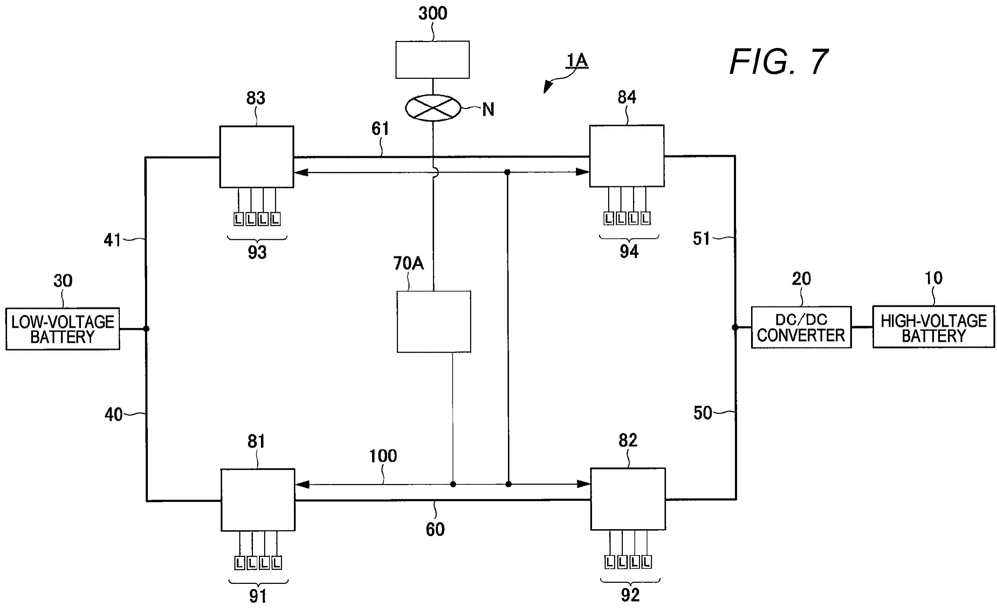

Next, a power supply system according to a second embodiment of the present invention will be described with reference to FIG. 7.

FIG. 7 is a block diagram illustrating a configuration example of a power supply system 1A according to the second embodiment. Note that description of contents overlapping with those of the power supply system 1 according to the first embodiment will be omitted.

The power supply system 1A according to the second embodiment includes a high-voltage battery 10, a DC/DC converter 20, a low-voltage battery 30, a vehicle central control device 70A, and a first power distribution device 81 to a fourth power distribution device 84. In the power supply system 1A, the plurality of power distribution devices (the first power distribution device 81 to the fourth power distribution device 84) are ring-connected. The first power distribution device 81 and the second power distribution device 82 are connected in series and are adjacent to each other. Similarly, the third power distribution device 83 and the fourth power distribution device 84 are connected in series and are adjacent to each other. In the power supply system 1A according to the second embodiment, the first power distribution device 81, the second power distribution device 82, the third power distribution device 83, and the fourth power distribution device 84 are connected in parallel to the plurality of power supplies (the high-voltage battery 10 and the low-voltage battery 30). Therefore, when the first power distribution device 81 switches from a power supply trunk line path in which a failure has occurred to another power supply trunk line, the second power distribution device 82 is connected in bypass (in series) by the switched power supply trunk line path. In addition, when the third power distribution device 83 switches the power supply trunk line, the fourth power distribution device 84 is connected in bypass (in series) by the switched power supply trunk line path.

A connection form between the low-voltage battery 30, the first power distribution device 81, the second power distribution device 82, the DC/DC converter 20, and the high-voltage battery 10 is the same as that of the power supply system 1 according to the first embodiment illustrated in FIG. 1. In the power supply system 1A according to the second embodiment, the low-voltage battery 30 and the third power distribution device 83 are connected by a power supply trunk line 41. In addition, the third power distribution device 83 and the fourth power distribution device 84 are connected by a power supply trunk line 61. In addition, the fourth power distribution device 84 and the DC/DC converter 20 are connected by a power supply trunk line 51. Further, the vehicle central control device 70A and the first power distribution device 81 to the fourth power distribution device 84 are connected by the communication line 100.

The vehicle central control device 70A distributes vehicle information including the field effect transistor characteristic data 241, the resistance characteristic data 242 for the field effect transistor, and the like received from the server 300 via the Internet N to each power distribution device 80. Therefore, the first power distribution device 81 and the third power distribution device 83 on the side to which the low-voltage battery 30 is connected and the second power distribution device 82 and the fourth power distribution device 84 on the side to which the high-voltage battery 10 is connected share information on the pulse drain current damage resistances of the semiconductor switches. For example, the first power distribution device 81 and the second power distribution device 82 share information on the pulse drain current damage resistances of their semiconductor switches. In addition, the third power distribution device 83 and the fourth power distribution device 84 share information on the pulse drain current damage resistances of their semiconductor switches. Therefore, the power distribution devices 80 share the pulse drain current damage resistances of the semiconductor switches used in the power distribution devices 80 provided in the respective power supply wiring systems, and are different from those in the power supply system 1 according to the first embodiment in that unsaturation control is performed on the field effect transistors.

In addition, the vehicle central control device (the vehicle central control device 70A) determines an intermediate state holding time Tm based on the switch characteristic information for the semiconductor switch (the semiconductor switch 200 or 201) included in the other power distribution device (the second power distribution device 82). For example, the control unit (the control microcomputer 210) of the power distribution device (the first power distribution device 81) controls the switching of the semiconductor switch (the semiconductor switch 200 or 201) included in the own device (the first power distribution device 81) based on the holding time Tm determined by the vehicle central control device (the vehicle central control device 70).

In the switching control according to the second embodiment, when a failure occurs in the power supply trunk line 40, the first power distribution device 81 attenuates the power supplied from the second power distribution device 82 in accordance with the pulse drain current damage resistance of the semiconductor switch of the first power distribution device 81, and outputs the attenuated power to the component 91. Therefore, the semiconductor switch of the first power distribution device 81 is not damaged, and an excessive current does not flow into the component 91. Similarly, when a failure occurs in the power supply trunk line 41, the third power distribution device 83 attenuates the power supplied from the fourth power distribution device 84 in accordance with the pulse drain current damage resistance of the semiconductor switch of the third power distribution device 83, and outputs the attenuated power to a component 93. Therefore, the semiconductor switch of the third power distribution device 83 is not damaged, and an excessive current does not flow into the component 93.

In the power supply system 1A according to the second embodiment described above, the power supply trunk lines of the plurality of power distribution devices 80 are connected in a ring shape. Even with such a configuration, the power supply system 1A according to the second embodiment can obtain the same effects as the power supply system 1 according to the first embodiment described above. That is, when a failure occurs in the power supply trunk line to which power is supplied from the low-voltage battery 30, the power supplied from the high-voltage battery 10 via the DC/DC converter 20 at a timing when the power supply trunk line is switched is controlled in accordance with the pulse drain current damage resistance of the semiconductor switch such that an excessive current does not flow into the component 90. Therefore, there is no risk of damage to the semiconductor switch and the component 90.

### [Third Embodiment]

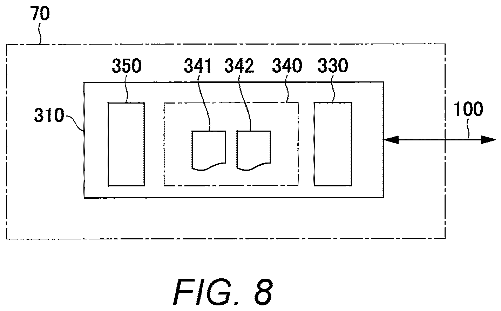

Next, a configuration example of a power supply system according to a third embodiment of the present invention will be described with reference to FIG. 8.

FIG. 8 is a block diagram illustrating a configuration example of a vehicle central control device 70A in a power supply system 1A according to the third embodiment. Note that description of contents overlapping with those of the power supply system 1A according to the second embodiment will be omitted.

In the power supply system 1A according to the third embodiment as well, the pulse drain current damage resistances of the semiconductor switches used in the respective power distribution devices 80 are shared between the plurality of power distribution devices 80 and the vehicle central control device 70 connected by the communication line 100. The difference is that, when the power distribution device 80 on the side to which the low-voltage battery 30 is connected switches the power supply trunk line, the process of determining the intermediate level for the intermediate saturation control and the process of determining the time for holding the intermediate level are performed by the vehicle central control device 70.

The vehicle central control device 70 includes a control microcomputer 310. The control microcomputer 310 includes a communication unit 330, a data storage unit 340, and a calculation unit 350.

The communication unit 330 has a communication function of communicating with each power distribution device 80 (see FIG. 7) through the communication line 100 and distributing various types of information and data.

The data storage unit 340 has a storage function of storing data such as field effect transistor characteristic data 341 and resistance characteristic data 342 for the field effect transistors. The information on field effect transistor characteristic data 341 and the information on resistance characteristic data 342 for the field effect transistors are the same as the field effect transistor characteristic data 241 and the resistance characteristic data 242 for the field effect transistors described with reference to FIG. 4, respectively.

The calculation unit 350 has a calculation function of performing a predetermined calculation based on various types of data read from the data storage unit 340. In addition, the calculation unit 350 performs a process of determining an intermediate level for the intermediate saturation control and a process of determining a time for holding the intermediate level. In addition to the above-described functions, the control microcomputer 310 also has functions of performing various types of fault diagnoses, self-diagnosis, and the like.

The intermediate level and the intermediate level holding time Tm determined by the calculation unit 350 of the vehicle central control device 70 are transmitted from the vehicle central control device 70 to the power distribution device 80. The power distribution device 80 controls the field effect transistor of the semiconductor switch according to the received intermediate level and intermediate level holding time Tm. Therefore, the third embodiment can obtain the same effects as the first embodiment.

### [Fourth Embodiment]

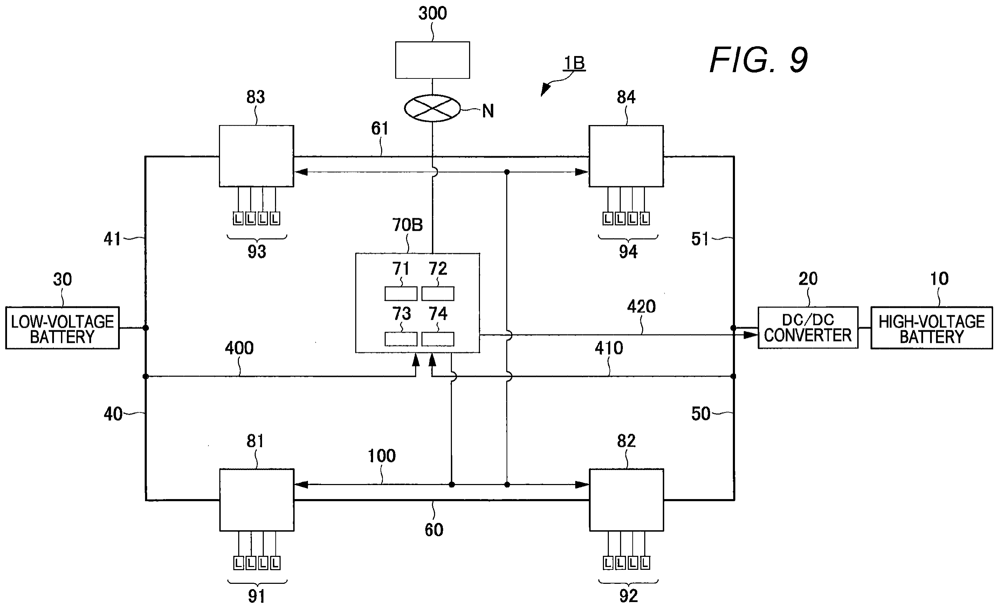

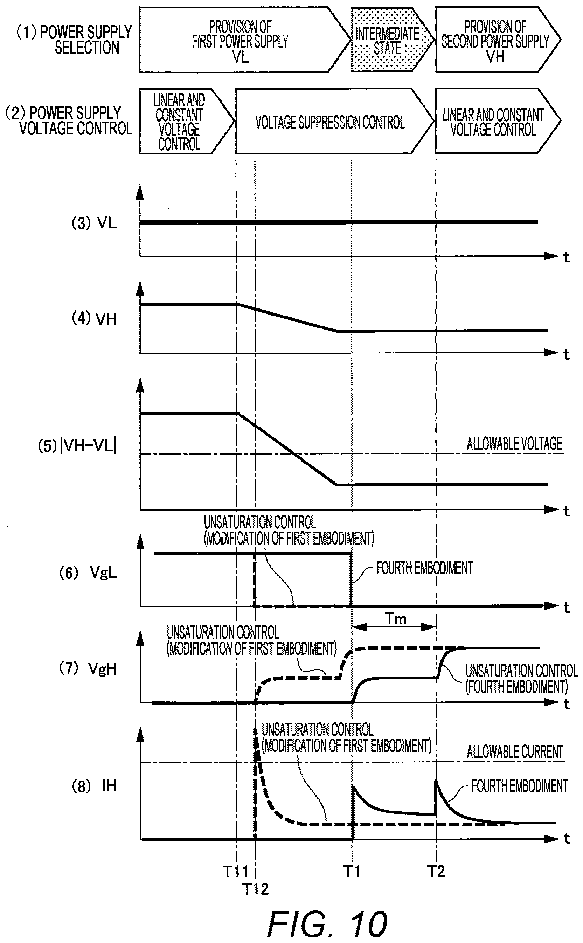

Next, a configuration example of a power supply system according to a fourth embodiment of the present invention will be described with reference to FIGS. 9 and 10.

FIG. 9 is a block diagram illustrating a configuration example of a power supply system 1B according to the fourth embodiment. Note that description of contents overlapping with those of the power supply systems according to the first to third embodiments will be omitted.

The first power distribution device 81 to the fourth power distribution device 84 of the power supply system 1B according to the fourth embodiment are connected in a ring shape. The power distribution devices 80 are connected in parallel to the plurality of power supplies (the high-voltage battery 10 and the low-voltage battery 30). In addition to the communication line 100, the vehicle central control device 70B includes a voltage monitoring line 400 connected to the power supply trunk line 40, a voltage monitoring line 410 connected to the power supply trunk line 50, and a communication line 420 connected to the DC/DC converter 20.

In addition, the vehicle central control device 70B includes a control microcomputer 71, a voltage monitoring unit 72, a voltage correction unit 73, and a warning unit 74.

The control microcomputer 71 has functions similar to those of the control microcomputer 210 included in the power distribution device 80 described above. In addition, the control microcomputer 71 distributes vehicle information to each power distribution device 80 and monitors the operation of each power distribution device 80 through the communication line 100.

The voltage monitoring unit 72 monitors an output voltage of the low-voltage battery 30 input from the voltage monitoring line 400 and an output voltage of the DC/DC converter 20 input from the voltage monitoring line 410. The voltage monitoring unit 72 calculates a difference between the output voltages of the low-voltage battery 30 and the DC/DC converter 20, and checks whether or not the calculated voltage difference is a voltage difference at which intermediate saturation control can be performed in the field effect transistor used in the semiconductor switch of each power distribution device 80. When the difference between the output voltages of the low-voltage battery 30 and the DC/DC converter 20 is too large, the pulse drain current flowing through the field effect transistor exceeds the allowable current. In this case, the field effect transistor is damaged, and power cannot be continuously supplied to the component 90 connected to the power distribution device 80.

Therefore, when it is detected that the difference between the output voltages of the low-voltage battery 30 and the DC/DC converter 20 is large, the voltage monitoring unit 72 transmits an output voltage correction command to the DC/DC converter 20 at the time of switching the power supply trunk line. This output voltage correction command is executed in order to lower the output voltage value of the DC/DC converter 20 within a range in which it can be suppressed to a value less than the allowable current value of the field effect transistor, that is, to a value less than the allowable voltage difference.

The vehicle central control device (the vehicle central control device 70B) includes an output voltage correction unit (a voltage correction unit 73). Here, it is assumed that the power supply connected to one power distribution device is a low-voltage power supply (a low-voltage battery 30), and the power supply connected to the other power distribution device is a high-voltage power supply (a DC/DC converter 20). The output voltage correction unit (the voltage correction unit 73) has a function of correcting the output voltage of the high-voltage power supply, based on the switch characteristic information for the semiconductor switches included in the plurality of power distribution devices 80, such that the voltage difference between the output voltage of the high-voltage power supply (the DC/DC converter 20) and the output voltage of the low-voltage power supply (the low-voltage battery 30) becomes less than or equal to a specified value. When the output voltage correction unit (the voltage correction unit 73) corrects the output voltage, a correction command signal for lowering the output voltage is output to the DC/DC converter 20 through the communication line 420 to correct the output voltage of the high-voltage power supply (the DC/DC converter 20). Upon receiving the correction command signal, the DC/DC converter 20 reduces the power output to the second power distribution device 82 and the fourth power distribution device 84. Note that the power distribution device 80 may include a voltage correction unit, and the voltage correction unit of the power distribution device 80 may output a correction command signal to the DC/DC converter 20 to lower the output voltage of the DC/DC converter 20.

The warning unit 74 checks whether or not the output voltage correction command value falls within the range between the upper limit value and the lower limit value thereof, and issues a warning in advance as a sign of a fault in the voltage correction unit (the voltage correction unit 73) including the voltage monitoring unit 72. For example, when the value of the output voltage correction command output by the output voltage correction unit (the voltage correction unit 73) is outside a predetermined range, the warning unit (the warning unit 74) issues a warning as a sign of a fault in the output voltage correction unit (the voltage correction unit 73). Note that the zone ECU corresponding to each power distribution device 80 may include a warning unit, and the warning unit may have a function of issuing a warning in advance as a sign of a fault in the voltage correction unit.

The upper limit value of the predetermined range for the output voltage correction command is the minimum value of absolute maximum ratings of the plurality of loads (the components 90), and is defined by, for example, the rated voltage of the semiconductor device in the power distribution device 80 or the upper limit value of the guaranteed operating voltage of the power distribution device 80. In addition, the lower limit value of the predetermined range for the output voltage correction command value is the maximum value of minimum guaranteed operating voltages of the plurality of loads (the component 90), and is defined by, for example, the lower limit value of the guaranteed operating voltage of the semiconductor switch or the lower limit value of the guaranteed operating voltage of the power distribution device 80. The control unit (the control microcomputer 210) of the power distribution device 80 suspends the switching control on the semiconductor switch until the voltage difference becomes equal to or less than a predetermined specified value.

FIG. 10 is a diagram illustrating how each voltage, a gate control signal, and a current change according to power supply selection.
(1) In power supply selection, similarly to FIG. 5, a power supply state when the power supply trunk line is switched such as the provision of first power supply, the intermediate state, and the provision of second power supply is shown. The state is switched to the intermediate state at time T1, and is switched to the provision of second power supply at time T2.
(2) In power supply voltage control, a state in which the power supply voltage control is performed in the order of linear and constant voltage control, voltage suppression control, and linear and constant voltage control is shown. At time T11 during the provision of first power supply, the linear and low-voltage control is switched to the voltage suppression control. In addition, at time T2, the voltage suppression control is switched to the linear and low-voltage control.

Time chart (3) shows how the low voltage VL supplied from the low-voltage battery 30 changes. The low voltage VL is held at a constant value regardless of the power supply state.

Time chart (4) shows how the high voltage VH supplied from the DC/DC converter 20 changes. The output voltage correction unit (the voltage correction unit 73) corrects the output voltage of the high-voltage power supply (the DC/DC converter 20). The high voltage VH starts to decrease at time T11 when the linear and low-voltage control is switched to the voltage suppression control, and stops decreasing just before time T1 when the provision of first power supply is switched to the intermediate state. Thereafter, the high voltage VH is held at a constant value.

Time chart (5) shows how the absolute value of the difference between the high voltage VH and the low voltage VL changes. The difference also starts to decrease in accordance with the timing at which the high voltage VH starts to decrease at time T11. Thereafter, the difference also stops decreasing in accordance with the timing at which the high voltage VH stops decreasing just before time T1. Thereafter, the difference is held below the allowable voltage.

Time chart (6) shows how the gate control signal VgL changes. In the power supply system 1 according to the first embodiment, as illustrated in FIG. 5, the gate control signal VgL has changed to the low level at time T1 when the intermediate state starts. On the other hand, in a power supply system 1 according to a modification of the first embodiment, as indicated by a broken line in FIG. 10, the gate control signal VgL changes to the low level at time T12 immediately after the voltage suppression control starts at time T11. In addition, as indicated by a solid line in FIG. 10, the control microcomputer 71 of the power supply system 1B according to the fourth embodiment changes the gate control signal VgL to the low level at time T1 when the intermediate state starts.

Time chart (7) shows how the gate control signal VgH changes. In the power supply system 1 according to the first embodiment, as indicated by the solid line graph V11 in FIG. 5, the gate control signal VgH changes to the intermediate level at time T1 when the intermediate state starts, and the unsaturation control is performed. On the other hand, in the power supply system 1 according to the modification of the first embodiment, as indicated by a broken line in FIG. 10, the gate control signal VgH changes to the intermediate level and the unsaturation control is performed at time T12 immediately after the voltage suppression control starts at time T11. In addition, as indicated by a solid line in FIG. 10, the control microcomputer 71 of the power supply system 1B according to the fourth embodiment controls the operation of the semiconductor switch 201 so that after the gate control signal VgH changes to the intermediate level at time T1 when the intermediate state starts (first stage), the gate control signal VgH changes to the high level at time T2 defined by the holding time Tm within the allowable switching time (second stage).

Time chart (8) shows how the current IH changes. In the power supply system 1 according to the modification of the first embodiment, as indicated by a broken line in FIG. 10, the current IH exceeds the allowable current as the gate control signal VgH changes to the intermediate level at time T12. On the other hand, as indicated by a solid line in FIG. 10, the control microcomputer 71 of the power supply system 1B according to the fourth embodiment changes the gate control signal VgH from the intermediate level to the high level at time T1 and time T2, and accordingly, the current IH does not exceed the allowable current. Therefore, a current IH exceeding the allowable current does not flow into the component 90.

In the power supply system 1B according to the fourth embodiment described above, the control microcomputer 71 of the vehicle central control device 70B calculates a voltage difference between the low-voltage battery 30 and the DC/DC converter 20. After the calculated voltage difference sufficiently decreases to be less than the allowable voltage difference, the control microcomputer 71 transmits a permission signal for permitting the execution of the unsaturation control to the power distribution device 80. Thereafter, the power distribution device 80 performs unsaturation control. In this manner, the vehicle central control device 70B can prevent damage to the field effect transistor by suppressing the voltage difference to be less than the allowable voltage difference before the power distribution device 80 performs unsaturation control. In addition, each power distribution device 80 can continue to stably supply power to the component 90 connected downstream of the own device.

Here, when it is detected that the voltage applied to the first power distribution device 81 has dropped, the control microcomputer 71 transmits, from the communication line 420, an instruction signal for instructing the DC/DC converter 20 to lower the voltage applied to the second power distribution device 82. Therefore, the DC/DC converter 20 can lower the voltage applied to the second power distribution device 82 so that the voltage difference between the voltage applied to the first power distribution device 81 and the voltage applied to the second power distribution device 82 falls within the predetermined range. As a result, even if a failure occurs in the power supply trunk line 40 and a voltage from the power supply trunk line 60 is applied to the first power distribution device 81, it is possible to continue to supply appropriate power to the component 91 connected to the first power distribution device 81 without placing an excessive burden on the first power distribution device 81. This control is similarly performed in the relationship between the voltage applied to the third power distribution device 83 and the voltage applied to the fourth power distribution device.

The power supply system 1B according to the fourth embodiment is configured to monitor voltages using the voltage monitoring lines 400 and 410. However, even if a configuration is adopted in which various types of power information acquired by another device or information on the voltage difference between the low-voltage battery 30 and the DC/DC converter 20 is transmitted to the vehicle central control device 70B, the same effects as those of the power supply system 1B according to the fourth embodiment can be obtained.

Note that the control unit (the control microcomputer 210) of the power distribution device 80 may temporarily interrupt the energization to some of the loads connected to the semiconductor switches during the period of the switching control on the semiconductor switches. In this case, the control microcomputer 210 can continue to stably operate all the loads by selecting loads to which the energization is to be temporarily interrupted according to the importance and priority to be described below.

In addition, the first power distribution device 81 may include an output voltage correction unit (a functional unit corresponding to the voltage correction unit 73 described above) that corrects the output voltage of the high-voltage power supply (the DC/DC converter 20), based on the switch characteristic information for the semiconductor switches included in the plurality of power distribution devices 80, such that the voltage difference between the output voltage of the high-voltage power supply (the DC/DC converter 20) and the output voltage of the low-voltage power supply becomes equal to or less than a specified value. Then, the control unit (the control microcomputer 210) of the power distribution device 80 suspends the switching control on the semiconductor switch until the voltage difference becomes equal to or less than a predetermined specified value. With this configuration, the functions of the central control device 70 can be reduced, and the first power distribution device 81 can correct the DC/DC converter 20, so that the voltage difference between the DC/DC converter 20 and the low-voltage battery 30 can be controlled to the specified value or less.

### [Fifth Embodiment]

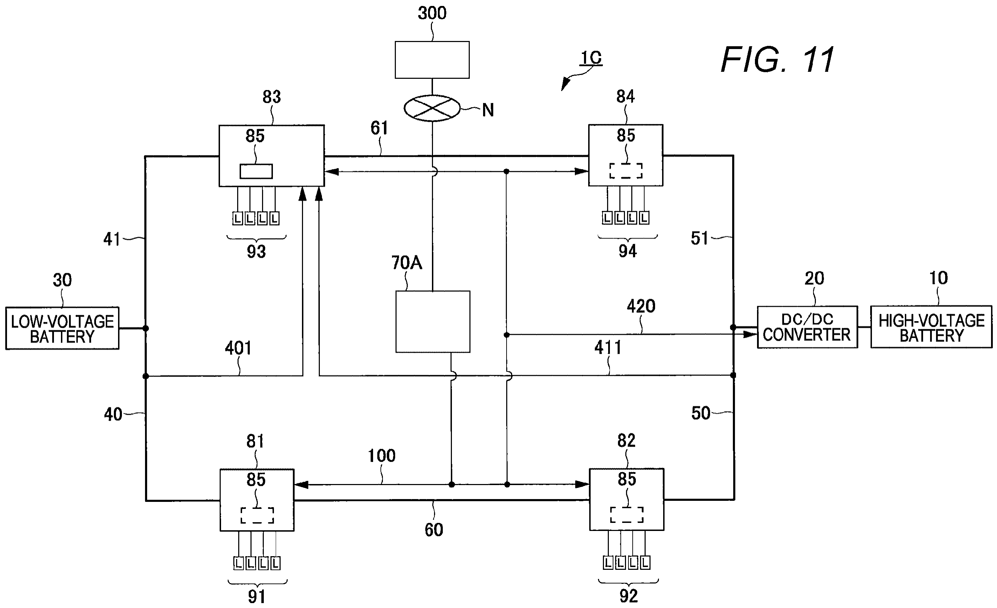

Next, a configuration example of a power supply system according to a fifth embodiment of the present invention will be described with reference to FIG. 11.

FIG. 11 is a block diagram illustrating a configuration example of a power supply system 1C according to the fifth embodiment. Note that description of contents overlapping with those of the power supply systems according to the first to fourth embodiments will be omitted.

The power supply system 1C according to the fifth embodiment is different from the power supply systems according to the other embodiments in that the third power distribution device 83 includes a voltage monitoring unit 85. The first power distribution device 81 to the fourth power distribution device 84 and the vehicle central control device 70A are connected by a communication line 100.

In FIG. 11, the configuration will be described focusing on the voltage monitoring unit 85 included in the third power distribution device 83. The third power distribution device 83 is connected to the low-voltage battery 30 via a voltage monitoring line 401, and is connected to the DC/DC converter 20 via a voltage monitoring line 411. The voltage monitoring unit 85 monitors the voltage of the low-voltage battery 30 and the voltage of the DC/DC converter 20 through the voltage monitoring lines 401 and 411, and calculates a voltage difference. The control microcomputer 210 of the third power distribution device 83 performs intermediate saturation control after confirming that the voltage difference calculated by the voltage monitoring unit 85 has sufficiently lowered to less than the allowable voltage difference.

The voltage monitoring unit 85 may be provided in any one of the first power distribution device 81, the second power distribution device 82, and the fourth power distribution device 84. In this case, the voltage monitoring lines 401 and 411 are connected to the power distribution device 80 provided with the voltage monitoring unit 85, and the voltage monitoring unit 85 monitors voltages and calculates a voltage difference.

In the power supply system 1C according to the fifth embodiment described above, the voltage monitoring unit 85 included in any one of the first power distribution device 81 to the fourth power distribution device 84 directly monitors a voltage of the power supply switching source (the low-voltage battery 30) and a voltage of the power supply switching destination (the DC/DC converter 20) and calculates a voltage difference. Therefore, the control microcomputer 210 of the power distribution device 80 including the voltage monitoring unit 85 can perform intermediate saturation control after the voltage difference calculated by the voltage monitoring unit 85 has sufficiently lowered to less than the allowable voltage difference. When the control microcomputer 210 performs the intermediate saturation control, it is possible to reduce a time lag in which the vehicle central control device 70 transmits a permission signal for permitting the execution of the power supply switching control to the first power distribution device 81 to the fourth power distribution device 84, as carried out in the power supply system 1B according to the fourth embodiment. Therefore, the power supply system 1C according to the fifth embodiment can perform the power supply switching control in a more timely manner than the power supply system 1B according to the fourth embodiment.

### [Sixth Embodiment]

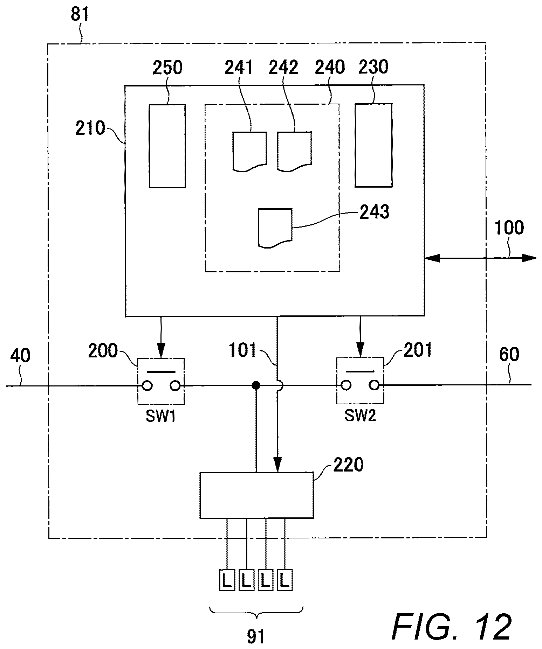

Next, a configuration example of a power supply system according to a sixth embodiment of the present invention will be described with reference to FIGS. 12 to 14. In the power supply system according to the sixth embodiment, the configuration of the power distribution device 80 in the power supply system 1A according to the second embodiment illustrated in FIG. 7 is changed. Description of contents overlapping with those of the power supply systems according to the first to fifth embodiments will be omitted.

FIG. 12 is a block diagram illustrating an internal configuration example of the first power distribution device 81 in the power supply system according to the sixth embodiment. Note that detailed description of the second power distribution device 82 to the fourth power distribution device 84 having the same configuration as the first power distribution device 81 will be omitted.

The control microcomputer 210 included in the first power distribution device 81 has the same configuration as the control microcomputer 210 illustrated in FIG. 4, but is different in that a component operation continuation priority list 243 is provided in the data storage unit 240. The control unit (the control microcomputer 210) of the power distribution device 80 determines whether to energize or cut off some of the loads connected to the semiconductor switch based on the importance and priority of the loads in the vehicle. For example, referring to the component operation continuation priority list 243, the control microcomputer 210 determines whether to continuously supply or temporarily cut off power depending on the type of the component 91 at the time of power supply switching control.

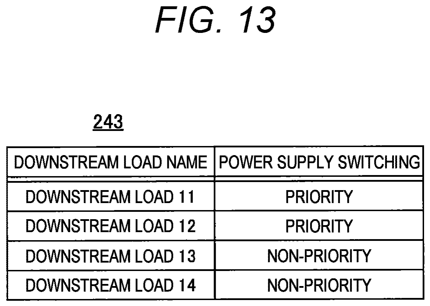

FIG. 13 is a diagram illustrating a configuration example of the component operation continuation priority list 243 provided in the first power distribution device 81 according to the sixth embodiment. Here, sensors, actuators, and the like collectively referred to as components 91 are referred to as "downstream loads".

The component operation continuation priority list 243 has items: downstream load name and power supply switching.

In the downstream load name item, the names of downstream loads connected to the power distributor 220 of the first power distribution device 81 are stored.

In the power supply switching item, whether priority or non-priority is set to the switching of power supply is stored for each downstream load.

In selecting whether to continuously supply power or to temporarily cut off power, priority levels are classified depending on the importance of the plurality of downstream loads. For example, downstream loads related to the running, turning, and stopping of the vehicle need to continue to operate even during power supply switching, and thus, they are given high priorities and power is preferentially and continuously supplied thereto. In FIG. 13, downstream loads 11 and 12 correspond to the downstream loads related to the running, turning, and stopping of the vehicle, and priority is set to downstream loads 11 and 12 in the power supply switching item.

On the other hand, the downstream loads of the body system such as an air conditioner or a power window are not very important. Therefore, the power is temporarily cut off during power supply switching, and the power supply to the downstream loads of the body system is restarted after the power supply switching control is completed. In FIG. 13, downstream loads 13 and 14 correspond to the downstream loads of the body system, and non-priority is set to downstream loads 13 and 14 in the power supply switching item.

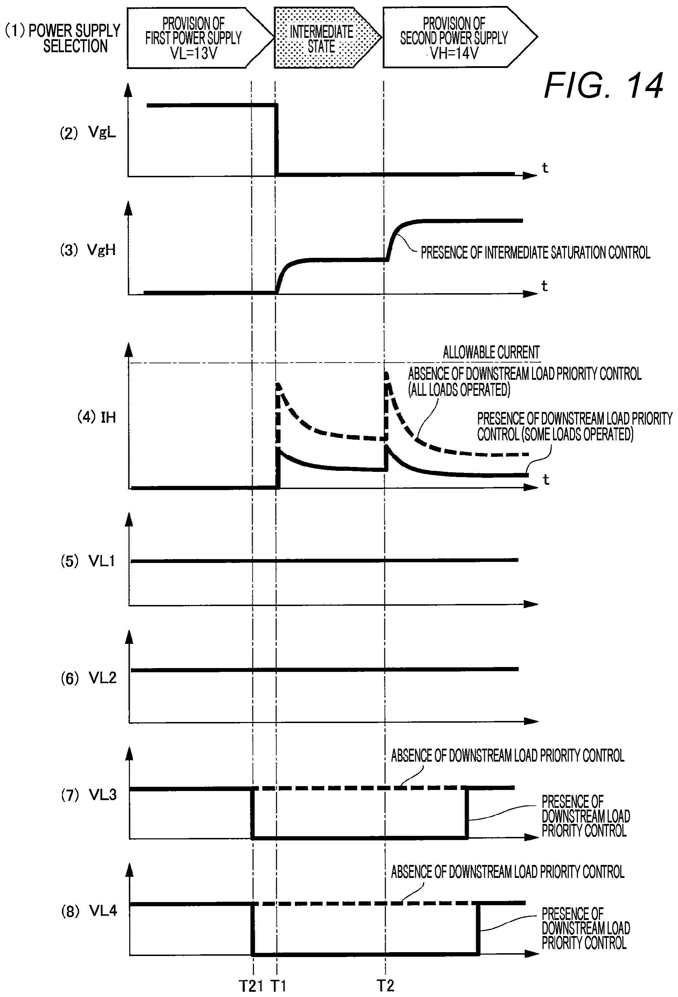

FIG. 14 is a diagram illustrating how each voltage, a gate control signal, and a current change according to power supply selection.
(1) In power supply selection, similarly to FIG. 5, a power supply state when the power supply trunk line is switched such as the provision of first power supply, the intermediate state, and the provision of second power supply is shown. The state is switched to the intermediate state at time T1, and is switched to the provision of second power supply at time T2.

Time chart (2) shows how the gate control signal VgL changes. At time T1 when the provision of first power supply is switched to the intermediate state, the gate control signal VgL changes to the low level.

Time chart (3) shows how the gate control signal VgH changes. Similarly to the power supply system 1 according to the first embodiment, the gate control signal VgH changes to the intermediate level at time T1 when the intermediate state starts (first stage), and the gate control signal VgH further changes to the high level at time T2 (second stage), whereby the intermediate saturation control is performed.

Time chart (4) shows how the current IH changes. As indicated by a broken line in FIG. 14, when the control microcomputer 210 does not perform priority control on the downstream loads, that is, when all the downstream loads are operated, the current IH rises to near the allowable current at times T1 and T2. Therefore, there is a possibility that an excessive current IH may flow into the downstream load. On the other hand, as indicated by a solid line in FIG. 14, when the control microcomputer 210 performs priority control on the downstream loads, that is, when some of the downstream loads are operated, the current IH rising at times T1 and T2 cannot reach the allowable current.

Time chart (5) shows how an energization signal VL1 transmitted to the semiconductor switch 260 changes. The control microcomputer 210 uses the energization signal VL1 to control temporary cut-off or restart of power supplied to downstream load 11 connected to the semiconductor switch 260.

Time chart (6) shows how an energization signal VL2 transmitted to the semiconductor switch 260 changes. The control microcomputer 210 uses the energization signal VL2 to control temporary cut-off or restart of power supplied to downstream load 12 connected to the semiconductor switch 260.

Downstream loads 11 and 12 are loads to be prioritized at the time of power supply switching. Therefore, regardless of the state of power supply selection, the energization signals VL1 and VL2 are maintained at the high level, and the operations of downstream loads 11 and 12 do not change.

Time chart (7) shows how an energization signal VL3 transmitted to the semiconductor switch 260 changes. The control microcomputer 210 uses the energization signal VL3 to control temporary cut-off or restart of power supplied to downstream load 13 connected to the semiconductor switch 260.

Time chart (8) shows how an energization signal VL4 transmitted to the semiconductor switch 260 changes. The control microcomputer 210 uses the energization signal VL4 to control temporary cut-off or restart of power supplied to downstream load 14 connected to the semiconductor switch 260.

Downstream loads 13 and 14 are loads that are not prioritized at the time of power supply switching. When the control microcomputer 210 does not perform priority control on the downstream loads, if the energization signals VL3 and VL4 are maintained at the high level as indicated by broken lines in FIG. 14, there is a possibility that the current IH may reach the allowable current as shown in time chart (4). On the other hand, when the control microcomputer 210 performs priority control on the downstream loads, as indicated by solid lines in FIG. 14, the energization signals VL3 and VL4 are transmitted at the low level immediately before time T1 when the state is switched to the intermediate state. The semiconductor switch 260 that has received the energization signals VL3 and VL4 at the low level temporarily cuts off power supply to downstream loads 13 and 14. After the control microcomputer 210 executes the intermediate saturation control in the intermediate state and completes the power supply switching control, the energization signals VL3 and VL4 are transmitted at the high level. Therefore, the power supply to downstream loads 13 and 14 is restarted, and the functions of downstream loads 13 and 14 are restored.

In the power supply system according to the sixth embodiment described above, the power supply is controlled by the component operation continuation priority list 243 defining the priority in maintaining the energized state at the time of power supply switching for each downstream load connected to the semiconductor switch 260. Therefore, even during a power supply switching period, it is possible to continue to stably supply power to a downstream load with high importance. In addition, since the power supply to a downstream load with low importance among the plurality of downstream loads is temporarily cut off, the current IH flowing into the downstream load with high importance can be suppressed to be less than the allowable current.

### [Seventh Embodiment]

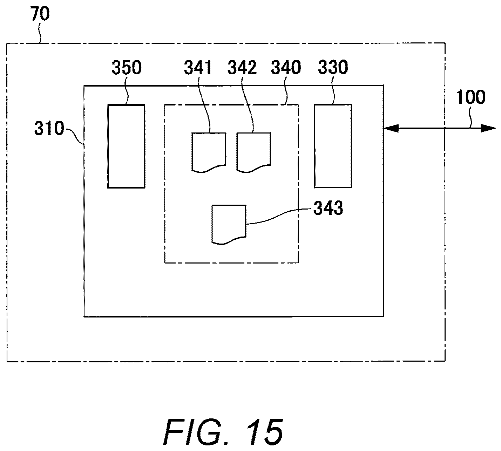

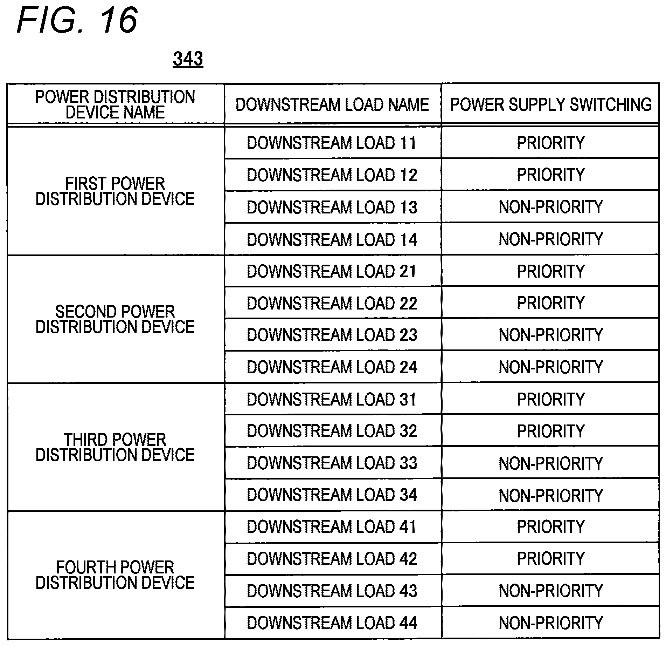

Next, a configuration example of a power supply system according to a seventh embodiment of the present invention will be described with reference to FIGS. 15 and 16.

FIG. 15 is a block diagram illustrating a configuration example of a vehicle central control device 70 included in the power supply system according to the seventh embodiment. Note that description of contents overlapping with those of the power supply systems according to the first to sixth embodiments will be omitted.

The vehicle central control device 70 according to the seventh embodiment has the same configuration as the vehicle central control device 70 illustrated in FIG. 8, but is different in that a component operation continuation priority list 343 is provided in the data storage unit 340. The vehicle central control device (the control microcomputer 310 of the vehicle central control device 70) determines whether to energize or cut off some of the loads connected downstream of the semiconductor switch based on the importance and priority of the loads in the vehicle, and notifies the power distribution device 80 of the determination result. The vehicle central control device 70 is an output source that instructs each power distribution device 80 to continuously supply power to the downstream load or temporarily cut off the power supply. Therefore, referring to the component operation continuation priority list 343, the calculation unit 350 of the vehicle central control device 70 determines whether to continuously supply or temporarily cut off power depending on the type of the component 91 at the time of power supply switching control, and transmits an instruction to the corresponding power distribution device 80. The control unit (the control microcomputer 210) of the power distribution device 80 energizes or cuts off some of the loads connected to the semiconductor switch (the semiconductor switch 260 of the power distributor 220) based on the determination result.

FIG. 16 is a diagram illustrating a configuration example of the component operation continuation priority list 343 provided in the vehicle central control device 70 according to the seventh embodiment.

The component operation continuation priority list 343 includes items: power distribution device name, downstream load name, and power supply switching.

In the power distribution device name item, the names of the first power distribution device 81 to the fourth power distribution device 84 are stored.

In the downstream load name item, the names of downstream loads connected to the power distributors 220 of the first power distribution device 81 to the fourth power distribution device 84 are stored.

In the power supply switching item, whether priority or non-priority is set to the switching of power supply is stored for each downstream load.

In the component operation continuation priority list 343 according to the seventh embodiment as well, in selecting whether to continuously supply power or to temporarily cut off power, priority levels are classified depending on the importance of the plurality of downstream loads. For example, priority is set to downstream loads related to the running, turning, and stopping of the vehicle in the power supply switching item, and non-priority is set to downstream loads of the body system in the power supply switching item.

In the power supply system according to the seventh embodiment described above, the vehicle central control device 70 has the component operation continuation priority list 343. The vehicle central control device 70 controls power supply for each power distribution device 80 and for each downstream load connected to the semiconductor switch 260 of each power distribution device 80 according to the component operation continuation priority list 343 defining the priority in maintaining the energized state at the time of power supply switching. For this reason, after the shift to the state in which the execution of the power supply switching control is necessary, a command to continuously supply power to the downstream load or temporarily cut off power from the downstream load is transmitted from the vehicle central control device 70 to each power distribution device 80 according to the above-described priority list. In addition, after the power supply switching control is completed, the power distribution device 80 can restart the power supply to the downstream load whose power supply has been temporarily cut off.

In addition, from the viewpoint of the entire vehicle, the vehicle central control device 70 can manage the power supply in cooperation with the power distribution devices 80 other than the power distribution device 80 for which the power supply switching is required. Therefore, the vehicle central control device 70 can more stably manage the power supply to the downstream load with high priority.

Note that the present invention is not limited to the above-described embodiments, and it goes without saying that various other applications and modifications can be taken without departing from the gist of the present invention set forth in the claims.

For example, the above-described embodiments specifically and concretely describe the configurations of the devices and the systems in order to describe the present invention in an easy-to-understand manner, and are not necessarily limited to those having all the described configurations. In addition, some of the configurations of the embodiments described here can be replaced with configurations of other embodiments, and furthermore, a configuration of another embodiment can be added to a configuration of a certain embodiment. In addition, a part of the configuration of each embodiment can be added to, deleted from, or replaced with another configuration.

In addition, the control lines and information lines shown are those considered necessary for explanation, and do not necessarily indicate all the control lines and information lines on products. It may be considered that almost all the components are connected to each other in reality.

### Reference Signs List

- 1, 1A, 1B, 1C: power supply system
- 10: high-voltage battery
- 20: DC/DC converter
- 30: low-voltage battery
- 40, 50, 60: power supply trunk line
- 70, 70A, 70B: vehicle central control device
- 71: control microcomputer
- 72: voltage monitoring unit
- 73: voltage correction unit
- 74: warning unit
- 80: power distribution device
- 81: first power distribution device
- 82: second power distribution device
- 83: third power distribution device
- 84: fourth power distribution device
- 85: voltage monitoring unit
- 100: communication line
- 200, 201: semiconductor switch
- 210: control microcomputer
- 220: power distributor
- 230: communication unit
- 240: data storage unit
- 241: field effect transistor characteristic data
- 242: resistance characteristic data
- 243: component operation continuation priority list
- 250: calculation unit
- 260: semiconductor switch

## Claims

1. An on-vehicle power control system in which a power supply and a power distribution device that distributes power supplied from the power supply to a load are connected by a power supply trunk line, and power to be supplied to the power distribution device is controlled in an on-vehicle power network to which a plurality of the power distribution devices are connected by the power supply trunk line, wherein
the power distribution device includes:
a semiconductor switch configured to switch a power supply trunk line path to another power supply trunk line path when a failure occurs in the power supply trunk line path through which power is supplied from the power supply trunk line to the own device, and distribute power supplied from the switched power supply trunk line path to the load; and
a control unit configured to, when a failure occurs in the power supply trunk line path, bring the semiconductor switch into an intermediate state in which the semiconductor switch is held in an unsaturated state based on switch characteristic information regarding an allowable current allowed by the semiconductor switch at a timing of switching the power supply trunk line path to the another power supply trunk line path, and perform switching control on the semiconductor switch such that a current flowing into the load from the semiconductor switch in the intermediate state becomes less than the allowable current.

2. The on-vehicle power control system according to claim 1, wherein
the plurality of power distribution devices are ring-connected by the power supply trunk line.

3. The on-vehicle power control system according to claim 2, wherein
the control unit determines a holding time for which the intermediate state is held based on the switch characteristic information for the semiconductor switch included in the own device and switch characteristic information for a semiconductor switch included in another one of the power distribution devices, and performs switching control on the semiconductor switch included in the own device based on the holding time.

4. The on-vehicle power control system according to claim 2, comprising:
a vehicle central control device configured to control the plurality of power distribution devices,
wherein the vehicle central control device determines a holding time for which the intermediate state is held based on switch characteristic information for the semiconductor switches included in the plurality of power distribution devices on the switched power supply trunk line path, and
the control unit of the power distribution device to which power is supplied through the power supply trunk line path where the failure has occurred performs switching control on the semiconductor switch included in the own device based on the holding time determined by the vehicle central control device.

5. The on-vehicle power control system according to claim 2, wherein
the power supply connected to one of the plurality of power distribution devices is a low-voltage power supply, and the power supply connected to the other power distribution device is a high-voltage power supply, and
the on-vehicle power control system comprises an output voltage correction unit configured to correct an output voltage of the high-voltage power supply, based on switch characteristic information for the semiconductor switches included in the plurality of power distribution devices, such that a voltage difference between the output voltage of the high-voltage power supply and an output voltage of the low-voltage power supply becomes equal to or less than a specified value.

6. The on-vehicle power control system according to claim 5, comprising:
a vehicle central control device configured to control the plurality of power distribution devices,
wherein the vehicle central control device includes the output voltage correction unit.

7. The on-vehicle power control system according to claim 5, wherein
the power distribution device includes the output voltage correction unit.

8. The on-vehicle power control system according to claim 5, comprising:
a warning unit configured to issue a warning as a sign of a fault in the output voltage correction unit when a value of a correction command output by the output voltage correction unit is outside a predetermined range,
wherein an upper limit value of the predetermined range is a minimum value of absolute maximum ratings of a plurality of the loads, and
a lower limit value of the predetermined range is a maximum value of minimum guaranteed operating voltages of the plurality of loads.

9. The on-vehicle power control system according to claim 8, wherein
the output voltage correction unit corrects the output voltage of the high-voltage power supply, and
the control unit of the power distribution device suspends the switching control on the semiconductor switch until the voltage difference becomes equal to or less than the predetermined specified value.

10. The on-vehicle power control system according to claim 8, wherein
the output voltage correction unit corrects the output voltage of the high-voltage power supply, and
the control unit of the power distribution device temporarily interrupts energization to some of the loads connected to the semiconductor switch during a period of the switching control on the semiconductor switch.

11. The on-vehicle power control system according to claim 10, wherein
the control unit of the power distribution device determines whether to energize or interrupt some of the loads connected to the semiconductor switch based on importance and priority of the loads in the vehicle.

12. The on-vehicle power control system according to claim 10, comprising:
a vehicle central control device configured to control the on-vehicle power control system,
wherein the vehicle central control device determines whether to energize or interrupt some of the loads connected downstream of the semiconductor switch based on importance and priority of the loads in the vehicle, and notifies the power distribution device of a determination result, and
the control unit of the power distribution device energizes or interrupts the some loads connected to the semiconductor switch based on the determination result.

13. A power distribution device connected to an on-vehicle power network, to which a plurality of power supplies are connected, by a power supply trunk line to distribute power to a load, the power distribution device comprising:
a semiconductor switch configured to switch a power supply trunk line path to another power supply trunk line path when a failure occurs in the power supply trunk line path through which power is supplied from the power supply trunk line to the own device, and distribute power supplied from the switched power supply trunk line path to the load; and
a control unit configured to, when a failure occurs in the power supply trunk line path, bring the semiconductor switch into an intermediate state in which the semiconductor switch is held in an unsaturated state based on switch characteristic information regarding an allowable current allowed by the semiconductor switch at a timing of switching the power supply trunk line path to the another power supply trunk line path, and perform switching control on the semiconductor switch such that a current flowing into the load from the semiconductor switch in the intermediate state becomes less than the allowable current.

14. The power distribution device according to claim 13, wherein
the power supply connected to the own device among the plurality of power distribution devices is a low-voltage power supply, and the power supply connected to the other power distribution device is a high-voltage power supply,
the power distribution device comprises an output voltage correction unit configured to correct an output voltage of the high-voltage power supply, based on switch characteristic information for the semiconductor switches included in the plurality of power distribution devices, such that a voltage difference between the output voltage of the high-voltage power supply and an output voltage of the low-voltage power supply becomes equal to or less than a specified value, and
the control unit suspends the switching control on the semiconductor switch until the voltage difference becomes equal to or less than the predetermined specified value.

15. A vehicle central control device provided in an on-vehicle power control system in which a power supply and a power distribution device that distributes power supplied from the power supply to a load are connected by a power supply trunk line, and power to be supplied to the power distribution device is controlled in an on-vehicle power network to which a plurality of the power distribution devices are connected by the power supply trunk line, wherein
the vehicle central control device distributes resistance information for the semiconductor switch to the power distribution device to control power to be supplied to the plurality of power distribution devices,
the power distribution device including:
a semiconductor switch configured to switch a power supply trunk line path to another power supply trunk line path when a failure occurs in the power supply trunk line path through which power is supplied from the power supply trunk line to the own device, and supply power supplied from the switched power supply trunk line path to the load; and
a control unit configured to, when a failure occurs in the power supply trunk line path, bring the semiconductor switch into an intermediate state in which the semiconductor switch is held in an unsaturated state based on switch characteristic information regarding an allowable current allowed by the semiconductor switch at a timing of switching the power supply trunk line path to the another power supply trunk line path, and perform switching control on the semiconductor switch such that a current flowing into the load from the semiconductor switch in the intermediate state becomes less than the allowable current.
